(19) Europäisches Patentamt / European Patent Office / Office européen des brevets

(11) **EP 2 407 934 A2**

(12) **DEMANDE DE BREVET EUROPEEN**

(43) Date de publication:
**18.01.2012   Bulletin 2012/03**

(51) Int Cl.:
***G06T 17/20*** *(2006.01)*   ***G09B 23/40*** *(2006.01)*

(21) Numéro de dépôt: **11290285.3**

(22) Date de dépôt: **24.06.2011**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **16.07.2010   FR 1003001**

(71) Demandeur: **IFP Energies nouvelles**
**92852 Rueil-Malmaison Cedex (FR)**

(72) Inventeurs:
• **Ran, Longmin**
  **92500 Rueil-Malmaison (FR)**
• **Benali, Abdallah**
  **92150 Suresnes (FR)**
• **Borouchaki, Houman**
  **75007 Paris (FR)**
• **Bennis, Chakib**
  **92500 Rueil-Malmaison (FR)**

(54)   **Méthode pour générer un maillage hexa-dominant d'un bassin géometriquement complexe**

(57)   - Méthode pour générer un maillage d'un milieu souterrain comprenant au moins une couche sédimentaire traversée par au moins une faille.
- La couche étant délimitée verticalement par deux horizons géologiques discrétisés par deux surfaces tridimensionnelles triangulées, on construit, pour chaque horizon, une surface quadrillée tridimensionnelle au moyen d'une technique de dépliage isométrique tenant compte de la présence de faille. Puis, on génère le maillage du milieu souterrain en générant des cellules par création de liaisons entre les surfaces quadrillées tridimensionnelles. Pour ce faire, on détecte des noeuds de la première surface quadrillée situés d'un côté de la faille différent de celui d'un noeud de la seconde surface quadrillée ayant les mêmes coordonnées i, j. On relie chaque noeud non détecté avec un noeud de la seconde surface quadrillée ayant les mêmes coordonnées i, j, et on relie chaque noeud détecté avec la faille en considérant une direction d'un noeud voisin. Enfin, on régularise les cellules ayant au moins deux sommets confondus.

**Fig. 15**

**Description**

La présente invention concerne le domaine de l'exploration pétrolière, et plus particulièrement l'étude de l'histoire géologique de systèmes pétroliers, au sein d'un bassin sédimentaire.

La modélisation de bassin vise à reconstruire l'histoire géologique d'un bassin sédimentaire et de ses systèmes pétroliers pour aider à localiser les pièges à hydrocarbures, c'est-à-dire les réservoirs, à estimer leur quantité et qualité, et enfin, à évaluer les risques de rencontrer des excès de pression pendant les forages. Ces objectifs sont réalisés en étudiant l'histoire d'enfouissement des sédiments, leur histoire thermique, la cinétique de la formation des hydrocarbures, et la migration (l'écoulement) des hydrocarbures.

Une telle étude est réalisée au moyen de deux types d'outils : d'une part un logiciel, appelé simulateur de bassin, permettant de résoudre des systèmes d'équations aux dérivées ordinaires ou partielles résolus par différents schémas numériques ; et d'autre part un maillage dynamique décrivant l'évolution géométrique du bassin concerné, et sur lequel on résout les systèmes d'équations.

Aujourd'hui, l'exploration s'intéresse aux zones à géométrie complexe où les failles sont nombreuses et leur localisation aléatoire. La construction automatique d'un maillage 3D capable de représenter cette complexité géométrique est la première étape indispensable à l'élaboration d'une représentation d'un tel milieu, à partir des horizons qui délimitent les différentes couches géologiques et des failles qui coupent les horizons. Les horizons et les failles sont fournis en tant que surfaces, triangulées à partir d'un semis de points résultant des sondages sismiques.

Dans le monde de l'exploration pétrolière, la plupart des simulateurs de bassin fonctionnent sur des maillages réguliers ou « Scottish cartésiennes ». Pour essayer d'adapter les maillages aux failles et à toutes formes d'hétérogénéités, en tant que support du calcul de la simulation, on connaît la technique du raffinement local des grilles, la technique des grilles CPG (décrits dans le document FR 2 747 490 par exemple), ou encore, la technique des grilles avec des noeuds dédoublés verticalement.

Les maillages décrits ci-dessus sont basés sur des grilles. Ils sont quasiment structurés, c'est-à-dire que leur relation entre sommet est fixe : chaque sommet interne est incident à un nombre fixé de mailles et chaque maille est délimitée par un nombre fixé de faces et d'arêtes. Ils ne sont ainsi adaptés qu'à une géométrie relativement simple. Pour un simulateur de bassin, tel que le logiciel TemisFlow® (IFP, France), pour chaque âge donné, on construit un maillage par empilement des couches, représentées sur une même grille 2D (carte), reliées par des verticales. La construction du maillage est très simple, cependant, il est impossible de représenter des failles souvent obliques.

Pour pouvoir gérer les failles, il existe des méthodes qui effectuent d'abord une décomposition manuelle par blocs suivant les failles, puis génèrent un maillage simple pour chaque bloc. C'est le cas du logiciel RML® (IFP, France). Cette approche n'est pourtant pas totalement adaptée à la simulation d'écoulement dans un milieu à géométrie complexe pour deux raisons : premièrement, la qualité d'éléments n'est pas satisfaisante pour des géométries irrégulières ; deuxièmement, avec la présence nombreuse et aléatoire des failles, il est presque impossible d'effectuer la décomposition manuelle du milieu traité.

Pour bien reproduire toute la complexité de la géométrie du milieu, il est aussi possible de construire un maillage entièrement non structuré, avec une relation entre sommet complètement arbitraire : un sommet du maillage peut appartenir à un nombre quelconque de mailles et chaque maille peut posséder un nombre quelconque d'arêtes ou de faces. On peut citer par exemple les maillages du type PErpendicular BIssector (PEBI) ou Voronoï proposés dans :

Z.E. Heinemann, G.F. Heinemann et B.M. Tranta, "Modelling heavily faulted reservoirs.", Proceedings of SPE Annual Technical Conferences, pages 9-19, New Orlean, Louisiana, september 1998, SPE.

Quoiqu'ils décrivent bien les géométries complexes, les maillages non structurés sont très lourds à construire, à manipuler et à stocker, au contraire de ceux structurés. Pour réconcilier entre les avantages et les inconvénients, des approches dites "hybrides" ont été proposées qui utilisent les maillages non structurés uniquement dans les zones à géométrie complexe. Néanmoins, le recollage des maillages non structurés aux ceux structurés reste une tâche difficile.

Dans la littérature générale, quatre grandes catégories de méthode existent pour générer d'une manière automatique des maillages hexa-dominant, elles sont :

- les méthodes d'octree/grille,

- les méthodes de plâtrage,

- les méthodes par bloc,

- les méthodes par balayage.

Le principe des méthodes octree/grille consiste à emballer le domaine à mailler dans une grille, et à subdiviser ce cube d'une façon récursive jusqu'à ce que la géométrie du domaine soit bien captée, c'est à dire jusqu'à ce que le critère de la taille des mailles, qui dépend essentiellement de la distance minimale des points du contour et des ressources disponibles, soit rempli. Des éléments tétraédriques ou hexaédriques sont alors créés à l'intersection des surfaces du domaine en suivant certains motifs d'intersections.

Les méthodes d'octree/grille sont avantageusement automatisées et applicables quelque soit la géométrie. Pourtant, le maillage généré n'est pas conforme à la forme du domaine ; de plus, lorsque le contour est irrégulier, un calcul intense d'intersections est inévitable et une explosion du nombre de mailles pourrait se produire pour atteindre une bonne précision d'approximation des frontières.

Les méthodes de type plâtrage consistent à remplir le volume du domaine avec des éléments 3D à partir du front surfacique initial du modèle et en avançant vers le centre en repartant du nouveau front qui vient d'être construit. La procédure se termine une fois que le front devient vide.

Dans les algorithmes de plâtrage, il est difficile de déterminer les ordres d'avancée du front et de détecter et traiter les zones de collision et de divergence. Ces méthodes sont ainsi considérées comme non robustes ; surtout quand les géométries complexes sont concernées, l'obtention d'un maillage de bonne qualité n'est pas garantie.

Les approches par blocs consistent à décomposer le domaine concerné en blocs grossiers ayant une relation élémentaire entre sommet (triangle, quadrangle, tétraèdre, pentaèdre, et hexaèdre), puis à mailler chaque bloc indépendamment les uns les autres par des méthodes algébriques ou par résolution d'EDP, et à recoller à la fin les blocs pour former le maillage global du domaine entier.

Le grand avantage des méthodes de blocs est qu'il est trivial de mailler une fois que la partition est achevée ; de plus, il est possible de résoudre le problème en parallèle sur chaque bloc. Toutefois, la partition elle-même reste très lourde et difficilement automatisable, et l'interfaçage inter-blocs doit être soigneusement géré pour assurer la conformité du recollement final.

Parfois considérées comme maillage 2.5D, les méthodes par balayage « balaient » un maillage quadrilatéral en suivant une courbe. Des couches régulières d'hexaèdres sont formées à un intervalle spécifié utilisant la même relation entre sommet que le maillage quadrilatéral. Cette technique peut être généralisée pour mailler des volumes de certaines classes par définition des surfaces de source et de cible.

Les maillages générés par les méthodes de balayage sont automatiquement alignés sur les interfaces, ce qui est évidemment un grand avantage. Pourtant, ces méthodes ne sont pas bien adaptées dans le contexte de la simulation du milieu poreux, où le changement de relation entre sommet peut intervenir d'une surface horizon à une autre à cause de l'intervention des failles.

L'objet de l'invention concerne une méthode alternative pour générer un maillage tridimensionnel d'un bassin, évolutif ou non, qui s'affranchit des problèmes des techniques antérieures pour traiter en trois dimensions la présence de failles. La méthode s'appuie sur la création d'un maillage hexadominant couplée à une méthode de détection de cellules affectées par des failles, une prise en compte de la faille pour ces cellules, et une régularisation de ces cellules traitées dans le cas de dégénérescence.

**La méthode selon l'invention**

Ainsi, l'objet de l'invention concerne une méthode pour générer un maillage d'un milieu souterrain comprenant au moins une couche sédimentaire traversée par au moins une faille, ladite couche étant délimitée verticalement par deux horizons géologiques discrétisés par deux surfaces tridimensionnelles triangulées. La méthode comporte les étapes suivantes :

   i. on transforme chaque surface tridimensionnelle en un quadrillage bidimensionnel régulier au moyen d'une technique de dépliage isométrique tenant compte de ladite faille, et en conservant un même nombre de quadrilatère dans chaque direction pour chaque quadrillage ;

   ii. on transforme chaque quadrillage régulier en une surface quadrillée tridimensionnelle, et on transforme en deux triangles chaque quadrilatère traversé par ladite faille au niveau d'une diagonale, chaque surface quadrillée comportant ainsi un ensemble d'éléments surfaciques triangulaires et quadrilatères ;

   iii. on génère ledit maillage du milieu souterrain en générant des cellules par création de liaisons entre des noeuds des éléments surfaciques des deux surfaces quadrillées tridimensionnelles :

   -   en détectant des noeuds de la première surface quadrillée situés d'un côté de la faille différent de celui d'un noeud de la seconde surface quadrillée ayant des mêmes coordonnées i, j ;

- en reliant chaque noeud de la première surface quadrillée non détecté avec un noeud de la seconde surface quadrillée ayant des mêmes coordonnées i, j ;

- en reliant chaque noeud de la première surface quadrillée détecté avec ladite faille en considérant une direction d'un noeud voisin; et

- en régularisant des cellules ayant au moins deux sommets confondus.

Selon l'invention, on peut réaliser l'étape de détection de noeuds en construisant une carte constituée d'une grille sur laquelle on superpose une trace fermée de ladite faille, la dite trace fermée correspondant aux traces de la faille sur chacune des dites surfaces quadrillées, et l'on détecte les noeuds à relier présents dans ladite trace fermée.
Selon l'invention, on peut régulariser des cellules au moyen des étapes suivantes :

- pour des cellules créées pour connecter un élément surfacique sur une faille :

  o Lorsque la cellule est un hexaèdre possédant seulement sept sommets, on découpe la cellule en deux tétraèdres et quatre pyramides en connectant le centre de la cellule avec ses six faces ;

  o Lorsque la cellule est un hexaèdre possédant seulement six sommets, on remplace la cellule par un prisme ;

  o Lorsque la cellule est un prisme possédant seulement cinq sommets, on remplace la cellule par une pyramide ;

  o Lorsque la cellule est un prisme possédant seulement quatre sommets, on remplace la cellule par un tétraèdre.

- pour des cellules créées pour connecter deux triangles avec un quadrilatère, lorsque la cellule est un prisme possédant seulement quatre sommets, on remplace le prisme par un tétraèdre, puis pour chaque élément voisin on relie son centre avec chacune de ses faces, dont une est divisée en deux triangles par une de ses diagonales.

Selon un mode de réalisation, le maillage est évolutif, et l'on modifie le maillage pour prendre en compte un dépôt d'une nouvelle couche sédimentaire au cours d'un temps géologique ultérieur, en définissant un chemin d'évolution des noeuds au somment dudit milieu, et en déformant ledit maillage selon le chemin d'évolution.
On peut prendre en compte la faille au sein dudit quadrillage régulier, en réalisant les étapes suivantes :

- on transforme chaque surface tridimensionnelle triangulée en une surface bidimensionnelle triangulée sur laquelle on projette ladite faille, au moyen de ladite technique de dépliage isométrique, la faille ainsi projetée formant des segments décrivant une ligne ouverte ;

- on détermine une première arrête dudit quadrillage intersectée par ladite ligne ouverte, en parcourant ladite ligne segment par segment et en partant d'une extrémité de ladite ligne ouverte ;

- on déplace l'extrémité de l'arête intersectée la plus proche du point d'intersection vers ledit point d'intersection ;

Si le milieu comporte plusieurs failles, on prend en compte les failles au sein dudit quadrillage régulier, en réalisant les étapes suivantes :

- on détermine une première arête dudit quadrillage intersectée par ladite ligne ouverte, en parcourant ladite ligne segment par segment et en partant d'une extrémité de ladite ligne ouverte ;

- on déplace l'extrémité de l'arête la plus proche du point d'intersection vers ledit point d'intersection si ce déplacement n'engendre pas un quadrilatère dont au moins un angle est supérieur à un seuil d'angle fixé, et si cette extrémité n'a pas déjà été déplacée ; sinon

- on déplace l'autre extrémité vers ledit point d'intersection si cette extrémité n'a pas déjà été déplacée ; sinon

- on raffine le maillage, jusqu'à ce qu'une extrémité puisse être déplacée, et on déplace cette extrémité.

Pour raffiner le maillage on peut réaliser les étapes suivantes :

- on ajoute un nouveau noeud au maillage, correspondant à un point d'intersection entre une faille et l'arête pour laquelle aucune extrémité ne peut être déplacée ;

- si l'arête est verticale, on dédouble la ligne complète du quadrillage contenant le point d'intersection, en ajoutant une succession d'arêtes horizontales, dans tous les quadrilatères de la ligne, la succession d'arêtes passant par le point d'intersection ;

- si l'arête est horizontale, on dédouble la colonne complète du quadrillage contenant le point d'intersection, en ajoutant une succession d'arêtes verticales, dans tous les quadrilatères de la colonne, la succession d'arêtes passant par le point d'intersection.

Selon l'invention on peut transformer ledit quadrillage régulier en une surface quadrillée à trois dimensions en réalisant les étapes suivantes :

- pour chaque noeud non situé sur une faille, on détermine ses coordonnées à partir de coordonnées barycentriques du noeud dans un repère défini par un triangle de la surface triangulée 2D auquel il appartient ;

- pour chaque noeud situé sur une faille, on détermine ses coordonnées à partir d'abscisses curvilignes mesurées sur ladite faille ;

- on établit des connectivités entre les noeuds de façon à maximiser un nombre de quadrilatère, seuls des quadrilatères pour lesquels une faille passe par l'une de ses diagonales, sont divisés en deux triangles.

Enfin, l'invention concerne également une méthode d'exploitation d'un milieu souterrain, dans laquelle on génère un maillage dudit milieu au moyen de la méthode selon l'invention, on réalise au moins une simulation d'écoulement au moyen d'un logiciel, tel qu'un simulateur de bassin, en s'appuyant sur ledit maillage, et on utilise ladite simulation pour définir un schéma d'exploitation dudit milieu, et on met en oeuvre le dit schéma d'exploitation.

D'autres caractéristiques et avantages de la méthode selon l'invention, apparaîtront à la lecture de la description ci-après d'exemples non limitatifs de réalisations, en se référant aux figures annexées et décrites ci-après.

**Présentation succincte des figures**

- la figure 1 montre la détection d'un quadrilatère dégénéré

- la figure 2 montre un quadrillage de dimension 20 x 15 et une faille à caler.

- la figure 3 montre le même quadrillage après le calage avec la faille.

- la figure 4 montre le principe du raffinement du quadrillage

- la figure 5 montre un quadrillage de dimension 25 x 20 avec 7 failles avant le calage.

- la figure 6 montre le même quadrillage que la figure 5, après le calage avec ces 7 failles. La dimension est devenue 51 x 33.

- la figure 7 montre un horizon réel 3D triangulé

- la figure 8 montre le même horizon déplié

- la figure 9 montre le quadrillage généré sur l'horizon déplié de la figure 8 et calé avec les failles

- la figure 10 montre le quadrillage après le report en horizon réel 3D du quadrillage de la figure 9

- la figure 11 montre les 3 types d'éléments d'un quadrillage reporté en horizon 3D

- la figure 12 montre le principe de la mise en correspondance de deux horizons

- les figures 13 et 14 montrent le problème de la mise en correspondance de deux horizons en zone faillée

- la figure 15 montre la solution au problème ci-dessus.

- la figure 16 montre la carte définissant la zone faillée

- les figures 17 à 24 montrent la régularisation des mailles dégénérées

- les figures 25 et 26 illustrent la définition de chemin d'évolution des noeuds

- la figure 27 illustre l'algorithme de choix d'un noeud pilier pour définir la position initiale d'un noeud.

**Description détaillée de la méthode**

La méthode suivant l'invention propose une technique pour retracer, en accord avec les schémas numériques définis, l'histoire de la formation des systèmes pétroliers dans un bassin sédimentaire à géométrie complexe en présence des failles, à partir d'un maillage du bassin. Le bassin comprend au moins une couche sédimentaire traversée par au moins une faille. Une couche sédimentaire est délimitée verticalement par deux horizons géologiques discrétisés par deux surfaces tridimensionnelles triangulées. La méthode comprend les étapes suivantes :

i. on transforme chaque surface tridimensionnelle en un quadrillage bidimensionnel régulier au moyen d'une technique de dépliage isométrique tenant compte de la faille, et en conservant le même nombre de quadrilatère dans chaque direction pour chaque quadrillage ;

ii. on transforme chaque quadrillage régulier en une surface quadrillée tridimensionnelle, et on transforme en deux triangles chaque quadrilatère traversé par la faille au niveau d'une diagonale, chaque surface quadrillée comportant ainsi un ensemble d'éléments surfaciques (triangles et quadrilatères) ;

iii. on génère le maillage du milieu souterrain en générant des cellules par création de liaisons entre des noeuds des éléments surfaciques des deux surfaces quadrillées tridimensionnelles :

- en détectant des noeuds de la première surface quadrillée situés d'un côté de la faille différent de celui d'un noeud de la seconde surface quadrillée ayant des mêmes coordonnées i, j ;

- en reliant chaque noeud de la première surface quadrillée non détecté avec un noeud de la seconde surface quadrillée ayant des mêmes coordonnées i, j ;

- en reliant chaque noeud de la première surface quadrillée détecté avec ladite faille, en considérant une direction d'un noeud voisin; et

- en régularisant des cellules ayant au moins deux sommets confondus.

1. Étape de dépliage isométrique

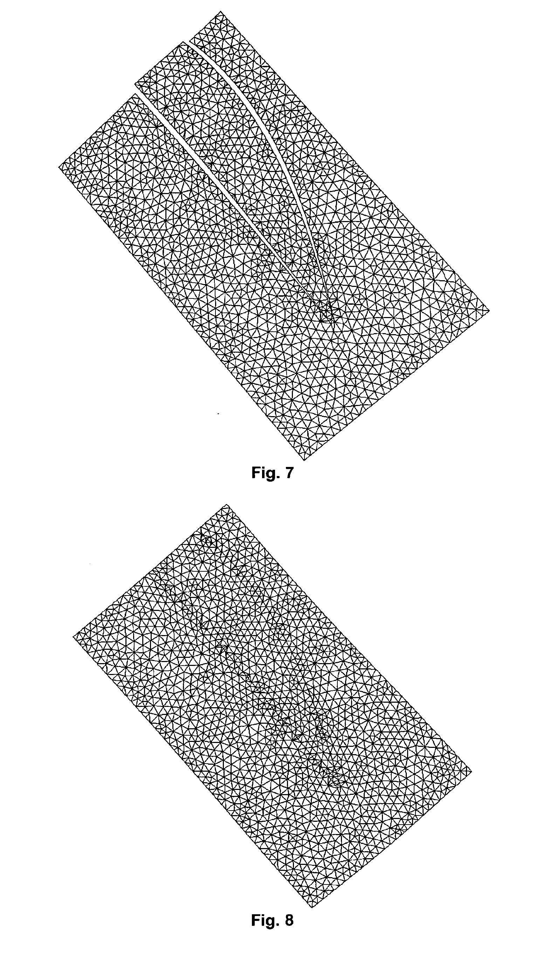

Cette étape consiste à déplier d'une façon isométrique une surface 3D triangulée (telle que représentée sur la figure 7) de façon à obtenir une surface 2D triangulée (telle que représentée sur la figure 8). Cette étape permet de coudre les déchirures des failles présentes sur les surfaces 3D triangulée.
On appelle « dépliage » une transformation d'une surface 3D en une surface 2D (opération consistant à mettre à plat une surface). Cette transformation est « isométrique » lorsqu'elle conserve les mesures comme l'aire du triangle, la longueur des arêtes, etc.
Le spécialiste connaît des outils et des méthodes pour réaliser un dépliage isométrique de surface. La méthode selon l'invention ne dépend pas du type de méthode.

2. Étape de quadrillage

Cette étape consiste à générer un quadrillage 2D régulier, à partir de la bordure de la surface 2D triangulée. On appelle quadrillage, un canevas (ensemble des lignes et des points principaux d'une figure) plan constitué par deux familles de droites perpendiculaires délimitant des carrés.

On génère ce quadrillage régulier au moyen des étapes suivantes :

- on choisit quatre points sur la bordure de la surface 2D triangulée, définissant ainsi quatre courbes sur la bordure, appelées courbes frontalières, reliant ces quatre points.
  Ces quatre points sont préférentiellement ceux au niveau desquels la bordure forme les angles les plus petits. On les appelle « coin ».

- on choisit les dimensions du quadrillage (deux entiers notés N et M), et l'on discrétise alternativement chacune des quatre courbes en fonction de ces dimensions.

Pour tous les quadrillages, on met en correspondance un coin et on oriente les courbes frontalières de telle manière que le domaine (la forme géométrique à mailler) se trouve à gauche. Cette étape sert à orienter tous les horizons de la même façon pour faciliter l'étape ultérieure de la mise en correspondance des horizons. Puis, on subdivise les courbes frontalières en N ou M segments de longueur constante, N et M étant les mêmes que le quadrillage en dessous.

- on applique la version discrétisée la formule de Coons pour construire le quadrillage régulier s'appuyant sur l'horizon déplié (surface 2D triangulée).

On rappelle la formule de Coons :

Étant donné quatre courbes paramétriques f1(u), f2(u), g1(v), g2(v) ($0 \leq u$, $v \leq 1$) définissant quatre bords jointifs, la formule de Coons calcule la surface la plus tendue qui passe par les quatre bords (qui interpole ces bords) :

$$S(u,v) = (1-u)g1(v) + ug2(v) + (1-v)f1(u) + vf2(u) - [(1-u)(1-v)P(0,0) \\ + ((1-u)vP(0,1) + u(1-v)P(1,0) + uvP(1,1)]$$

Les sommets P(i,j) sont les quatre coins de la surface.
On peut alors obtenir un maillage régulier NxM de cette surface par simple échantillonnage en prenant pour sommets les points S(i,j) correspondant aux ui = i/(N-1), vj = j/(M-1), i=0 à N-1, j=0 à M-1. La formule restreinte aux points du maillage devient:

$$S(i,j) = (1 - \frac{i}{N-1})g1(j) + \frac{i}{N-1}g2(j) + (1 - \frac{j}{M-1})f1(i) + \frac{j}{M-1}f2(i)$$

$$-[(1 - \frac{i}{N-1})(1 - \frac{j}{M-1})P(0,0) + (1 - \frac{i}{N-1})\frac{j}{M-1}P(0,1)$$

$$+ \frac{i}{N-1}(1 - \frac{j}{M-1})P(1,0) + \frac{i}{N-1}\frac{j}{M-1}P(1,1)]$$

3. Étape de calage des failles sur le quadrillage

La prise en compte d'une faille consiste à déformer le maillage de façon à ce qu'il soit conforme à la réalité du milieu souterrain à mailler. En effet, si une faille traverse un milieu, généralement les couches sédimentaires de ce milieu sont cassées et déformées. Le maillage doit donc rendre compte de ces déformations induites par les failles.

*Cas d'une faille <unique*

Au cours de cette étape, on prend en compte la faille au sein du quadrillage régulier, en réalisant les étapes suivantes :

- on détermine une première arête du quadrillage intersectée par la courbe ouverte, en parcourant cette courbe segment par segment et en partant de l'une de ses extrémités ;

- on déplace l'extrémité de l'arête intersectée la plus proche du point d'intersection vers le point d'intersection.

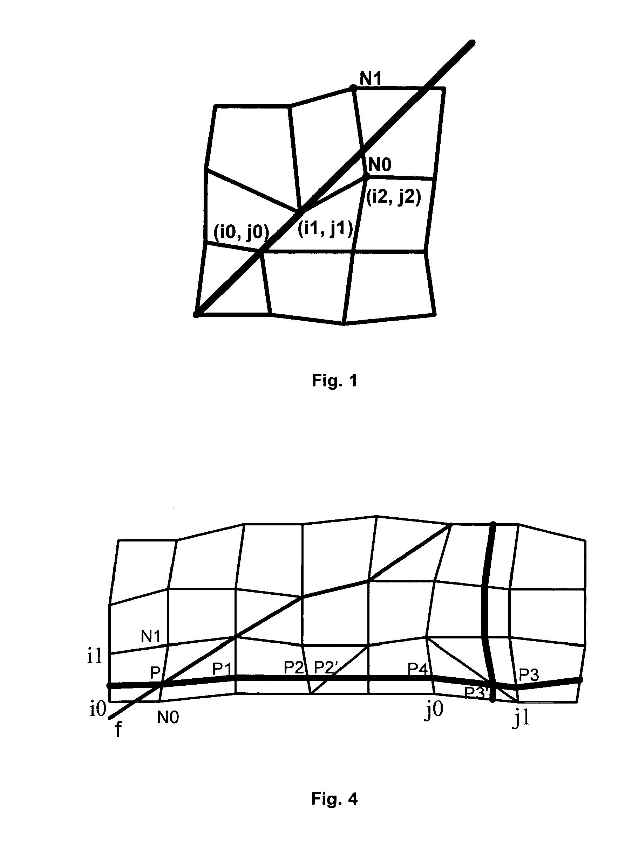

Une difficulté peut apparaître du fait que l'on puisse produire des quadrilatères dégénérés en faisant bouger cette extrémité. Ce problème est illustré sur la figure 1 :

Soient trois noeuds tels que :

- (i2, j2) le noeud à faire bouger

- (i1, j1) le noeud bougé juste avant (i2, j2)

- (i0, j0) le noeud bougé juste avant (i1, j1)

Si (i0 = i1 ou j0 = j1) alors (i0, j0) et (i1, j1) forment une arête (deux noeuds bougés successivement forment soit une diagonale, soit une arête d'un quadrilatère). De même, (i1, j1) et (i2, j2) forment une deuxième arête si on a (i1 = i2 ou j1 = j2). Par conséquent, ces deux arêtes construites seront dans le même quadrilatère si |i0 - i2| = 1 et |j0 - j2| = 1 et seront considérées comme alignées si l'angle entre elles dépasse un certain seuil d'alignement. Cette situation n'est pas acceptable car les hexaèdres ayant ce quadrilatère comme face seront torsadés. Pour surmonter cette difficulté, avant de déplacer l'extrémité la plus proche, on vérifie que ce déplacement n'engendre pas un quadrilatère dégénéré. On qualifie de dégénéré un quadrilatère dont au moins un angle est supérieur à un seuil d'angle fixé. Si effectivement, le fait de déplacer l'extrémité la plus proche engendre un tel quadrilatère, alors on déplace l'autre extrémité de l'arête intersectée. Selon l'exemple de la figure 1, on bouge l'autre extrémité de l'arête intersectée par la faille au lieu de (i2, j2).
La méthode étant mise en oeuvre par un ordinateur on décrit l'algorithme relatif à cette étape. L'algorithme démarre par l'identification du quadrilatère qui contient le premier point de la faille. Puis, l'intersection entre le premier segment de la faille et les arêtes de ce quadrilatère est calculée. Si aucune intersection n'est détectée, on passe au segment suivant de la faille et on boucle jusqu'à ce qu'une intersection soit trouvée. Ensuite, on bouge l'extrémité de l'arête intersectée la plus proche du point d'intersection vers celui-ci. S'il en résulte la formation d'un quadrilatère dégénéré, c'est l'autre extrémité de l'arête qui est bougée. Pour calculer l'intersection suivante, on avance dans les quadrilatères ayant le dernier noeud épousé en commun, en excluant ceux qui ont les deux derniers noeuds épousés comme une diagonale ou une arête. Si il n'y a plus d'intersection entre le segment courant et les quadrilatères à visiter, on réaffecte les quadrilatères à visiter avec ce qui contient le bout du segment courant, et on passe au segment suivant pour calculer l'intersection, et ainsi de suite. A la fin, on cale les deux bouts de la faille avec les noeuds les plus proches. A titre d'illustration, l'algorithme peut ainsi être décrit :

```
SegmentFaille ← 0 ;
q ← le quadrilatère conteneur du premier point de la faille ;
quadsAVisiter ← q ;
quadsAExclure ← nul ;


tant que segmentFauille < nombre total des segments faille
    calculer l'intersection du segmentFaille avec les quadsAVisiter en excluant les quadsAExclure ;
    n ← la bonne extrémité de l'arête intersectée ;
    si n != -1 alors
        quadsAExclure ← les quadrilatères ayant n et le dernier nœud épousé comme
                        arête/diagonale ;
        quadsAVisiter ← les quatre quadrilatères ayant n en commun ;
    sinon
        quadsAVisiter ← le quadrilatère où se trouve la deuxième extrémité du segmentFaille ;
        quadsAExclure ← nul ;
        segmentFaille ← segmentFaille + 1 ;
    fin si
fin tant que


épouser le premier point de la faille avec le coin le plus proche de q ;
pour chaque quadrilatère dans quadsAVisiter faire
    si le dernier point de la faille est dans quadrilatère alors
        épouser le dernier point de la faille avec le coin le plus proche du quadrilatère ;
        retourner ;
    fin si
fin pour
```

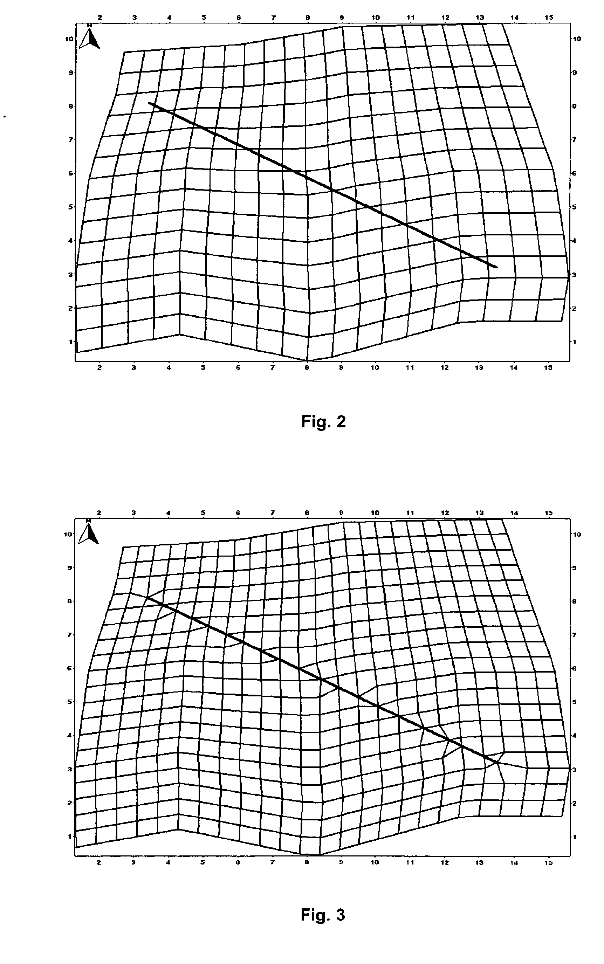

Les deux figures 2 et 3 montrent un quadrillage avant et après la prise en compte d'une faille unique. La ligne droite noire est la courbe ouverte représentant la faille. Elle ne fait pas partie du maillage.

*Cas de failles multiples*

En présence de failles multiples, tous les noeuds du quadrillage ne sont pas libres de bouger, car un noeud qui a déjà été déplacé pour prendre en compte une première faille, ne doit pas être modifié pour prendre en compte une deuxième faille. L'algorithme de calage doit donc tenir compte de ce nouveau contexte plus contraignant, et une procédure de raffinement est à effectuer éventuellement pour se délibérer de cette contrainte.
Selon l'invention, on prend en compte de multiples failles au sein du quadrillage régulier, en réalisant les étapes suivantes :

- on détermine une première arête dudit quadrillage intersectée par ladite ligne ouverte, en parcourant ladite ligne segment par segment et en partant d'une extrémité de ladite ligne ouverte ;

- on déplace l'extrémité de l'arête la plus proche du point d'intersection vers ledit point d'intersection si ce déplacement n'engendre pas un quadrilatère dont au moins un angle est supérieur à un seuil d'angle fixé, et si cette extrémité n'a pas déjà été déplacée ; sinon

- on déplace l'autre extrémité vers ledit point d'intersection si cette extrémité n'a pas déjà été déplacée ; sinon

- on raffine le maillage, jusqu'à ce qu'une extrémité puisse être déplacée, et on déplace cette extrémité.

Le raffinement du maillage peut être réalisé au moyen des étapes suivantes :

- on ajoute un nouveau noeud au maillage, correspondant à un point d'intersection entre une faille et l'arête pour laquelle aucune extrémité ne peut être déplacée ;

- si l'arête est verticale, on dédouble la ligne complète du quadrillage contenant le point d'intersection, en ajoutant une succession d'arêtes horizontales, dans tous les quadrilatères de la ligne, la succession d'arêtes passant par le point d'intersection ;

- si l'arête est horizontale, on dédouble la colonne complète du quadrillage contenant le point d'intersection, en ajoutant une succession d'arêtes verticales, dans tous les quadrilatères de la colonne, la succession d'arêtes passant par le point d'intersection.

Ce raffinement est également appliqué à tous les horizons situés plus bas, si l'on traite les horizons du plus bas vers le plus haut.

La méthode étant mise en oeuvre par un ordinateur on décrit l'algorithme relatif à cette étape. Pour décrire si un noeud est contraint par une ou plusieurs failles, deux notions sont introduites : la première dite « Degré faillé d'un noeud » et la deuxième dite « Failles passantes d'un noeud ».

*Degré faillé d'un noeud :* Un noeud S est dit de degré faillé *n* s'il est le point d'intersection de *n* failles. Si *n* est nul, alors aucune faille ne passe par ce noeud. On suppose ci-après « *df* » le foncteur qui retourne le degré faillé d'un noeud. Les degrés faillés des noeuds sont stockés comme une propriété du quadrillage, utiles pour la phase de prise en compte des failles, pour vérifier si un noeud est contraint par des failles, pour la phase d'optimisation du quadrillage (df = 0 : bouger librement le noeud ; df = 1 : projeter sur la faille passante ; df >= 2 : ne pas bouger), et enfin, pour la phase de report en 3D du quadrillage, pour décider quand et comment un noeud est dédoublé.

*Failles passantes d'un noeud* : c'est la liste de failles qui passent par un noeud. On suppose ci-après « failles Passantes » le foncteur pour récupérer les failles qui passent par un noeud.

Le processus global du calage des failles multiples itère de bas en haut sur tous les horizons, pour générer des quadrillages réguliers et y caler les failles. Pour chaque horizon, on génère d'abord un quadrillage de la même dimension que ceux situés plus bas (géologiquement plus anciens), puis on cale tous les points d'intersection entre les failles et les extrémités des failles. On itère ensuite sur toutes les failles pour les prendre en compte dans le maillage. Lorsqu'un raffinement est nécessaire sur un quadrillage d'un horizon pour épouser une faille, les quadrillages des horizons déjà traités subissent de manière exhaustive le même raffinement, pour garder une seule dimension pour tous les quadrillages.

Concernant les structures des données, compte tenu du fait que le nombre des noeuds d'un quadrillage sur un horizon peut augmenter suite à un raffinement, une liste chaînée est utilisée pour représenter le quadrillage, afin de faciliter l'ajout d'un nouveau noeud à une position quelconque. Aussi, les noeuds traversés par une faille (nommé « noeudsEpousés ») sont enregistrés dans une liste chaînée pour permettre une insertion rapide.

Pour caler une faille donnée, on cherche, segment par segment, les points d'intersection entre la faille et le quadrillage, et on décide les noeuds à bouger jusqu'à ces points d'intersection. Un point d'intersection est calculé de la façon suivante : on commence par le premier noeud dans noeudsEpousés qui représente le début du premier segment de la faille, on récupère les quatre cellules voisines de ce noeud dit « noeud courant », et on cherche l'intersection du premier segment appelé « segment courant » avec ces quatre cellules. Si une intersection est trouvée, on choisit une extrémité de l'arête intersectée pour la bouger jusqu'au point d'intersection. Les cellules voisines du noeud représentant cette intersection deviennent les cellules à visiter pour calculer l'intersection suivante avec le même segment de faille, à l'exclusion de celles qui ont comme arête ou diagonale le nouveau noeud épousé et celui d'avant. Si il n'y a plus d'intersection entre le segment courant et les cellules à visiter, on réaffecte les cellules à visiter avec celle qui contient le bout du segment courant, et on passe au segment suivant pour calculer l'intersection, ainsi de suite.

Au cours du parcours de la faille, on peut rencontrer des points déjà épousés qui représentent par exemple les intersections de la faille avec autres failles présentes sur le même horizon. Il faut donc vérifier pour le noeud dernièrement épousé, s'il existe un noeud en avant dans noeudsEpousés. Si oui, si les deux noeuds forment une arête ou une diagonale d'un quadrilatère, le noeud en avant devient le noeud courant pour calculer les cellules à visiter, et on passe au segment faille qui correspond à ce noeud pour continuer le calcul d'intersection. A titre d'illustration, l'algorithme peut ainsi être décrit :

```
segmentFaille ← 0 ;

nœudCourant ← premier élément dans nœudsEpousées ;

cellulesAVisiter ← les quatre cellules ayant nœudCourant en commun ;

cellulesAExclure ← nul ;


tant que vrai faire

        nœudEnAvant ← le nœud qui suit nœudCourant dans nœudsEpousées si il existe, -1
sinon ;

        si nœudCourant et nœudEnAvant forment une arête ou une diagonale alors
                si nœudEnAvant est le dernier dans nœudsEpousées alors
                        retourner ;
                fin si

                n ← nœudEnAvant ;
                segmentFaille ← le segment de faille où se trouve n;
        sinon
                calculer l'intersection du segmentFaille avec les quadsAVisiter en excluant les
                        quadsAExclure ;
                n ← la bonne extrémité de l'arête intersectée ;
        fin si

        si n != -1 alors
                cellulesAExclure← les cellules ayant n et nœudCourant comme arête ou
                        diagonale ;
                nœudCourant ← n ;
                cellulesAVisiter ← les quatre cellules ayant nœudCourant en commun ;
        sinon si segmentFaille < nombre total des segments faille alors
                cellulesAVisiter ← la cellule ou se trouve la deuxième extrémité du segmentFaille ;
                cellulesAExclure ← nul ;
                segmentFaille ← segmentFaille + 1 ;
        sinon
                retourner ;
        fin si
fin tant que
```

Le processus de raffinement est déclenché par l'ajout comme un nouveau noeud d'un point d'intersection entre une faille et un quadrillage. En se référant à la figure 4 : soit P le point d'intersection, N0N1 l'arête où se situe P. Si cette arête est horizontale, une succession d'arêtes verticales est ajoutée entre les arêtes verticales d'indexes i0 et i1. Par contre, si cette arête est verticale, les arêtes ajoutées sont horizontales et se situeront entre les arêtes horizontales d'indexes j0 et j1. Les extrémités de ces nouvelles arêtes peuvent garder la même proportion que N0P/N0N1 sur leurs arêtes « mère » correspondantes, mais les points centraux sont préférables pour plus de régularité. Ces extrémités sont insérées dans la liste chaînée représentant le quadrillage, avec nx ou ny incrémenté de 1.

Les nouvelles arêtes peuvent être intersectées par les segments des failles déjà épousés, représentées soit par une arête, soit par une diagonale d'un quadrilatère. Si c'est le premier cas, le point d'intersection est aussi un noeud (ex. P1 dans la figure 4). Il faut alors insérer ce noeud dans « noeudsEpousés » de la faille correspondante. Dans le deuxième cas, il faut d'abord essayer de déplacer l'extrémité de la nouvelle arête plus proche du point d'intersection (ex. bouger P2 à P2' dans la figure 4) ; si cette extrémité est sur une faille, il faut bouger l'autre extrémité. Si les deux extrémités sont figées par des failles, il faut encore raffiner (ex. raffiner sur P3' dans la figure 4).

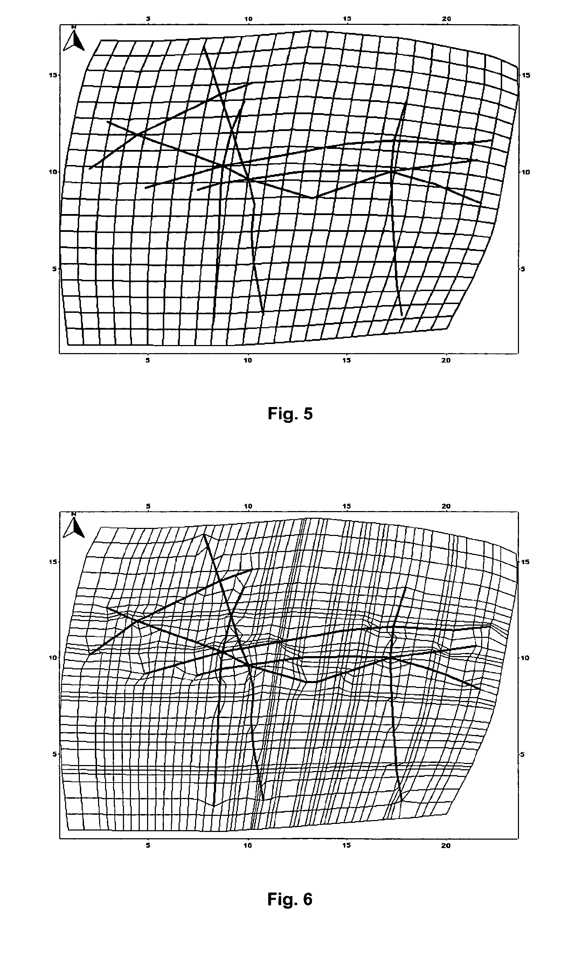

Les figures 5 et 6 montrent un quadrillage avant et après déformation pour prendre en compte sept failles. On note qu'un raffinement a été nécessaire.

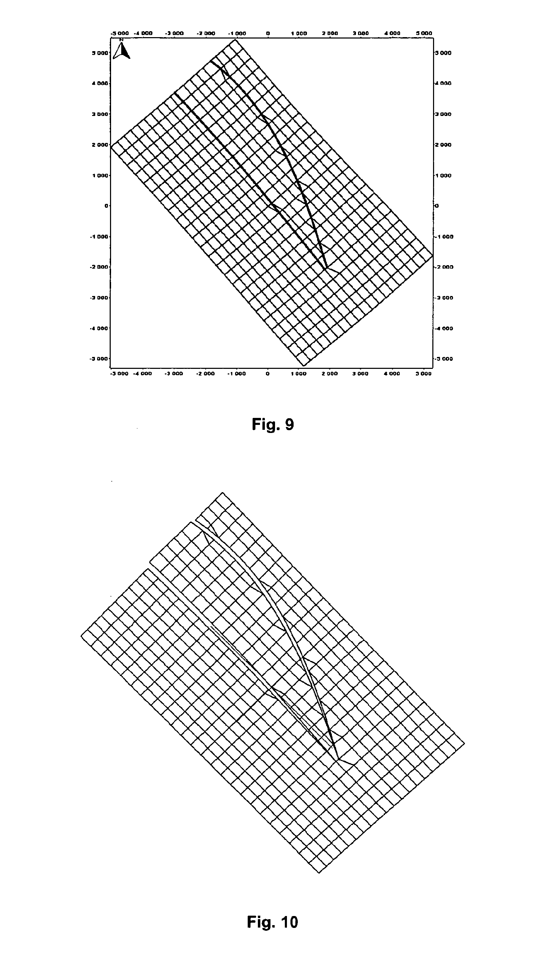

La figure 9 montre un quadrillage prenant en compte les failles.

4. Étape d'itération

Les étapes 1 à 3 sont réitérées pour chaque surface tridimensionnelle triangulée, en conservant un même nombre de quadrilatère dans chaque direction.

5. Étape de report des quadrillages en horizons réels

Cette étape consiste à reporter tous les quadrillages réguliers, déformés pour tenir compte des failles, en horizons réels 3D.

Selon l'invention, on peut transformer un quadrillage régulier en une surface quadrillée à trois dimensions en effectuant un changement de repère, du repère du quadrillage régulier au repère de la surface 3D triangulée, des noeuds du quadrillage. Les coordonnées des noeuds hors faille sont déterminées à partir de leurs coordonnées barycentriques dans un repère défini par le triangle de la surface triangulée 2D auquel ils appartiennent. Les coordonnées des noeuds situés sur une faille sont déterminées à partir de leurs abscisses curvilignes sur la faille. Les connectivités sont ensuite établies de façon à maximiser le nombre de quadrilatère, seuls les quadrilatères pour lesquels une faille passe par l'une de ses diagonales, sont divisés en deux triangles.

En particulier on peut réaliser les étapes suivantes :

- on positionne les noeuds dans le repère 3D :

- pour chaque noeud du quadrillage situé sur une faille, on détermine l'abscisse curviligne dudit noeud sur la faille, puis on reporte ce noeud sur la faille dans le repère 3D au moyen de cette abscisse curviligne, et on dédouble ce noeud sur chaque coté de la lèvre de la faille si nécessaire. Les coordonnées barycentriques de chaque noeud dédoublé sont calculées pour pouvoir être relocalisé dans le contexte dynamique ;

- pour chaque noeud du quadrillage situé en dehors une faille, on détermine les coordonnées barycentriques de chaque noeud dudit quadrillage dans un repère défini par le triangle de la surface triangulée 2D auquel le noeud appartient, puis on positionne chaque noeud dans un repère défini par le triangle de la surface triangulée 3D auquel le noeud appartient, en fonction desdites coordonnées barycentriques ;

- on connecte ces noeuds par des arêtes de façon à obtenir une surface 3D maillée avec un maximum de quadrilatère, seuls les quadrilatères pour lesquels une faille passe par l'une de ses diagonales, sont divisés en deux triangles, comme l'illustre la figure 10.

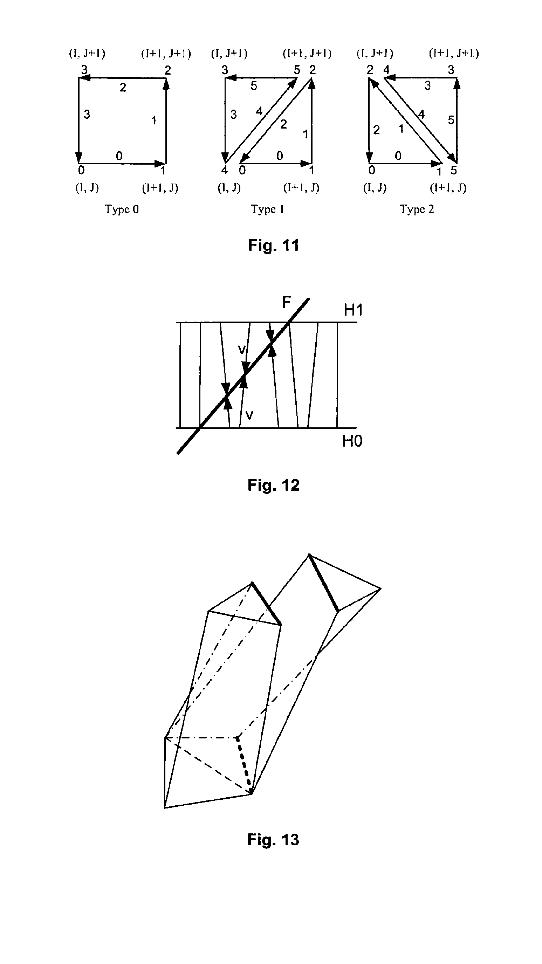

La méthode étant mise en oeuvre par un ordinateur on décrit l'algorithme relatif à cette étape. La structure principale est nommée "SplitGrid", elle représente un quadrillage 3D quasi-régulier, avec certains noeuds (I, J) dédoublés en deux ou plus. La figure 11 montre trois types de cellules pseudo-quadrilatère : quadrilatère normal, quadrilatère dédoublé en deux triangles par la diagonale allant de gauche inférieure à droite supérieure, quadrilatère dédoublé en deux triangles par la diagonale allant de droite inférieure à gauche supérieure. La numérotation locale des noeuds et des arêtes du quadrilatère est aussi indiquée dans le schéma. Avec cette notion des cellules pseudo-quadrilatère, le quadrillage reporté en horizon réel 3D reste une surface IJ.

Une "SplitGrid" est décrite par :

- *nx* et *ny* : nombre de colonnes et de lignes

- *nodes* : liste des noeuds (I, J) ;

- *cells* : liste des cellules

Pour un noeud (I, J), sont stockées les informations suivantes :

- nombre des noeuds dédoublés

- triangle conteneur et les coordonnées barycentriques dans le triangle, si le noeud n'est pas dédoublé ;

- pour chaque noeud dédoublé : numéro de faille, référence du côté de la faille, numéro du segment de la faille et abscisse curviligne du noeud sur ce segment. Quand le noeud représente une intersection entre des failles, les informations stockées sont plutôt le numéro du noeud dans la triangulation, la référence du côté d'une faille, l'autre référence du côté de l'autre faille.

- pour chaque noeud dédoublé : coordonnées x, y, z

Pour une cellule pseudo-quadrilatère, sont stockées les informations suivantes :

- type de la cellule

- nombre de sommets

- tableau de sommets
  Une fois que les noeuds du quadrillage déplié sont reportés en horizon réel, la connectivité entre ces noeuds est rétablie en formant des cellules avec les trois types mentionnés ci-dessus. Ces cellules sont construites une par une en parcourant d'abord la direction I puis J. Les étapes suivantes sont appliquées pour construire une cellule donnée

- Le type de la cellule courante est d'abord déterminé. Pour ce faire, il faut juste vérifier s'il y a une faille passante sur l'une de deux diagonales du quadrilatère en quadrillage déplié. Si oui, le type est 1 ou 2, si non, le type est 0.

- Le nombre de sommets pour la cellule est alors obtenu en fonction de son type, ainsi que l'indice globale (I, J) de chaque sommet.

- Avec son indice (I, J), on vérifie si chaque sommet est dédoublé ou pas, en examinant la liste de noeuds (I, J) préalablement remplis.

- Pour chaque sommet non dédoublé, son noeud équivalent est unique et pris immédiatement pour recomposer la cellule 3D.

- Pour chaque sommet dédoublé avec deux ou plus des noeuds équivalents, une de ses failles passantes est d'abord récupérée. Le côté de la faille où placer le noeud est calculé selon l'algorithme suivant. Le noeud équivalent est alors choisi selon la faille et ce côté.

*Calculer le côté de faille pour un noeud sur la faille*

Pour décider de quel côté de faille pour un noeud sur la faille, son noeud opposé dans la cellule est d'abord retiré.

- Pour une cellule du type 0, le noeud 0 est opposé au noeud 2, le noeud 1 est opposé au noeud 3, et réciproquement.

- Pour une cellule du type 1, les noeuds 0, 2 et 3 sont opposés à 1, les noeuds 4, 5 et 1 sont opposés à 3.

- Pour une cellule du type 2, les noeuds 1, 2 et 3 sont opposés à 0, les noeuds 4, 5 et 0 sont opposés à 3.

De façon générale, un noeud et sa contrepartie opposée ne sont jamais sur la même faille. Ainsi, le noeud opposé se situe sur un côté de la faille au lieu de se trouver sur la faille. Le bon côté de faille est alors calculé en fonction de ce noeud opposé. Pour ce faire, le segment de faille où se situe le noeud à reporter (côté 0) est récupéré en premier. Ensuite, les triangles incidents à chaque bout du segment de faille sont calculés. Un seul triangle incident commun existe pour les deux bouts ; il a pour sommets les deux bouts du segment de faille, soit B et C, et un troisième qui ne se situe pas sur la faille, soit A. Soit P le noeud opposé au noeud à reporter, P n'est donc pas sur la faille. Si P et A se trouvent sur deux côtés différents du segment faille BC, c'est-à-dire la coordonnée barycentrique de P est négative par rapport à A dans le triangle ABC (dans un espace 2D), le côté de la faille pour le noeud à reporter sera 1. Sinon, c'est 0.

trouver le noeud opposé P dans la cellule ;

côté ← 0 ;

récupérer le segment faille où se situe le noeud ;

récupérer les triangles incidents à un bout du segment faille ;

récupérer les triangles incidents à l'autre bout du segment faille ;

repérer le triangle commun de deux groupes de triangles ci-dessus ;

soit A, B, C les sommets du triangle, B et C constituent le segment faille ;

$$\alpha \leftarrow \left(\overrightarrow{PB} \times \overrightarrow{PC}\right) \Big/ \left(\overrightarrow{AB} \times \overrightarrow{AC}\right) ;$$

si α < 0 alors

    côté ← 1 ;

fin si

retourner côté ;

## 6. Étape de construction du premier maillage tridimensionnel

Cette étape consiste à construire le premier maillage tridimensionnel du bassin qui représente la couche sédimentaire la plus ancienne.

i. Les deux quadrillages 3D de deux horizons les plus bas (les plus anciens en termes de temps géologiques de dépôt) sont d'abord déformés selon la nouvelle géométrie des triangulations sous-jacentes du premier instant géologique. Il s'agit d'un repositionnement des noeuds du quadrillage selon leurs coordonnées barycentriques dans la triangulation à l'instant géologique concerné. ii On relie ensuite directement les quadrilatères ayant les mêmes coordonnées I, J sur les deux horizons les plus bas (les plus anciens car déposés en premier), de façon à former des mailles tridimensionnelles, appelées cellules et formant des hexaèdres.

Quand un quadrilatère, sur un horizon, est dédoublé en deux triangles via une faille qui passe par la diagonale, le quadrilatère correspondant sur tous les autres horizons est aussi virtuellement découpé de la même manière. Ainsi, deux prismes au lieu d'un hexaèdre sont formés entre deux horizons. Dans la figure 13, les segments dessinés en gras sont sur la même surface de faille, on voit que le quadrilatère en bas à gauche de la faille rejoint deux triangles en haut à gauche et à droite de la faille.

Quand il existe deux quadrilatères de mêmes coordonnées (I, J) dédoublés sur un horizon dédoublé en deux triangles via la diagonale allant de gauche inférieure à droite supérieure, et un autre quadrilatère correspondant dédoublé via la diagonale allant de gauche supérieure à droite inférieure, tous les quadrilatères de la même colonne sont divisés en quatre triangles via leurs deux diagonales.

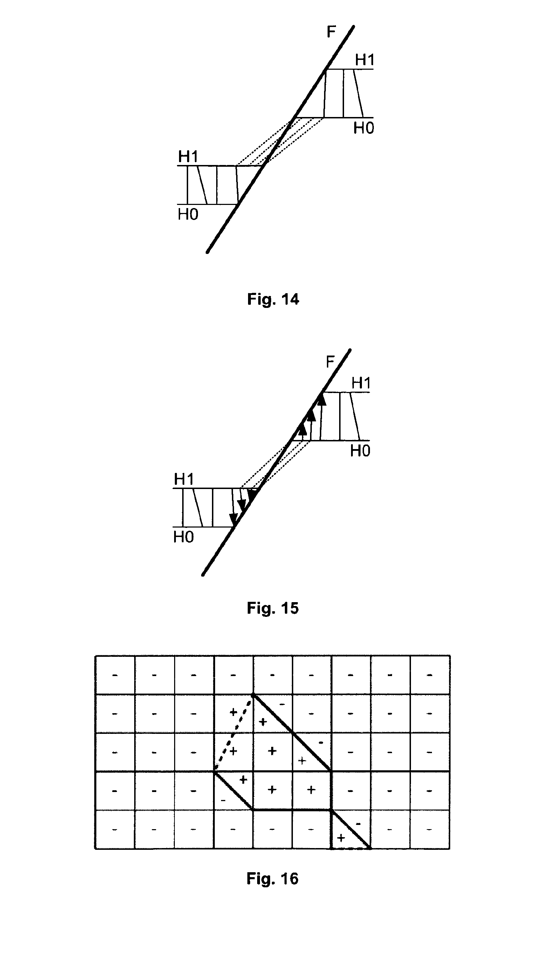

iii Cependant, deux éléments surfaciques (triangles, quadrilatères) d'un horizon en correspondance peuvent se trouver de part et d'autre d'une faille. On ne doit donc pas relier directement ces deux éléments pour ne pas traverser l'interface de la faille. On peut imaginer découper les mailles si elles sont traversées par une faille comme illustré sur la figure 12. Mais ceci n'est pas toujours acceptable pour le simulateur : une configuration problématique est produite quand les horizons sur les deux côtés de la faille glissent sur celle-ci, comme l'illustre la figure 14 : des éléments sont incorrectement construits en dehors de la couche formée entre les horizons H0 et H1 en reliant les mêmes i et j. Il est donc nécessaire de prendre en compte les failles entre les deux horizons, lors de la construction de ce maillage tridimensionnel. Pour ce faire, la méthode comporte les trois étapes suivantes :

    a. *Détection des cellules problématiques*

    b. *Construction des cellules le long des failles*

    c. *Régularisations des éléments dégénérés*

*a. Détection des cellules problématiques*

Une cellule est dite problématique, lorsque les deux éléments surfaciques (triangles, quadrilatères) d'un horizon en correspondance, et formant le haut et le bas de la cellule, se trouvent de part et d'autre d'une faille. La méthode selon l'invention comporte une étape de détection d'une telle configuration. Cette étape comporte les étapes suivantes :

1. on construit une carte pour chaque faille. Cette carte est constituée d'une grille unitaire sur laquelle on superpose la trace fermée de la faille associée. La figure 16 illustre une telle carte. Pour fermer la trace, on relie les mêmes extrémités de chaque trace pour former un domaine entre les deux traces (une trace par horizon).

2. on définit pour chaque carte une zone faillée définie sur la carte selon le principe suivant : un quadrilatère ou un triangle (formé par la division d'un quadrilatère le long de sa diagonale) compris (totalement ou partiellement) dans le domaine entre les deux traces fait partie de la zone faillée.

3. on détermine une cellule problématique en appliquant la règle suivante : si deux éléments surfaciques à relier se trouvent dans la zone faillée, on est en présence d'une configuration problématique.

*b. Construction des cellules le long des failles*

Au cours d'un premier parcours, on parcourt tous les éléments surfaciques (triangles, quadrilatères) d'un horizon. Les cellules non traversées par des failles sont construites, et la faille coupante et les éléments surfaciques en haut et en bas d'une cellule traversée par cette faille sont enregistrés dans une liste pour un traitement ultérieure. Chaque connexion entre un noeud sur une faille et un autre noeud est mise dans un "map" (structure de données qui est composée d'une collection de clés uniques et d'une autre collection de valeurs, une clé étant associée à une ou plusieurs valeurs) avec le noeud sur la faille comme valeur et l'autre noeud comme clé.
Au cours d'un second parcours, on parcourt tous les éléments surfaciques enregistrés dans la liste construite lors du premier parcours. Le parcours de cette liste est réitéré jusqu'à ce que tous les éléments surfaciques soient traités pour former des cellules. Une itération est composée des étapes suivantes :

i. pour chaque noeud d'un élément surfacique de la liste, on recherche un noeud connectant dans le "map" construit précédemment :

- si un tel noeud est trouvé, il est alors utilisé en tant que noeud pour former la connexion, et cette connexion est enregistrée dans une liste locale relative à cet élément surfacique ;

- si aucun noeud connectant n'est trouvé, et si ce noeud est sur la faille, on relie ce noeud à lui-même.

ii. Après la récupération noeud par noeud des noeuds connectant, si tous les noeuds de la face sont connectés, on passe à la face suivante.

iii. Sinon, on projette ces noeuds sur la faille coupante suivant la même direction que la connexion de plus grande longueur dans la liste locale, puis on relie ces noeuds avec leurs images sur la faille (figure 15) et on enregistre ces nouvelles connexions dans le "map". Les coordonnées barycentriques de l'image projetée sont enregistrées avec le triangle conteneur, ainsi que le noeud projetant et le numéro de la faille. Ces informations sont utiles pour faire évoluer le maillage volumique

iv. S'il reste encore des noeuds non connectés mais aucune connexion n'est repérée dans la liste locale des connexions, on annexe l'élément surfacique dans la liste des éléments surfaciques.

*c. Régularisations des cellules dégénérées*

La méthode selon l'invention pour construire des cellules le long des failles, peut produire des hexaèdres ou des prismes dégénérés à proximité des failles. Une cellule dégénérée est une cellule ayant au moins deux sommets confondus. Cette dégénérescence est due au fait que l'on peut relier un noeud à lui même. Ceci n'est pas acceptable pour le calculateur (simulateur de bassin). Selon l'invention, les cellules dégénérées sont donc régularisées pour que les simulateurs puissent produire des résultats utilisables.

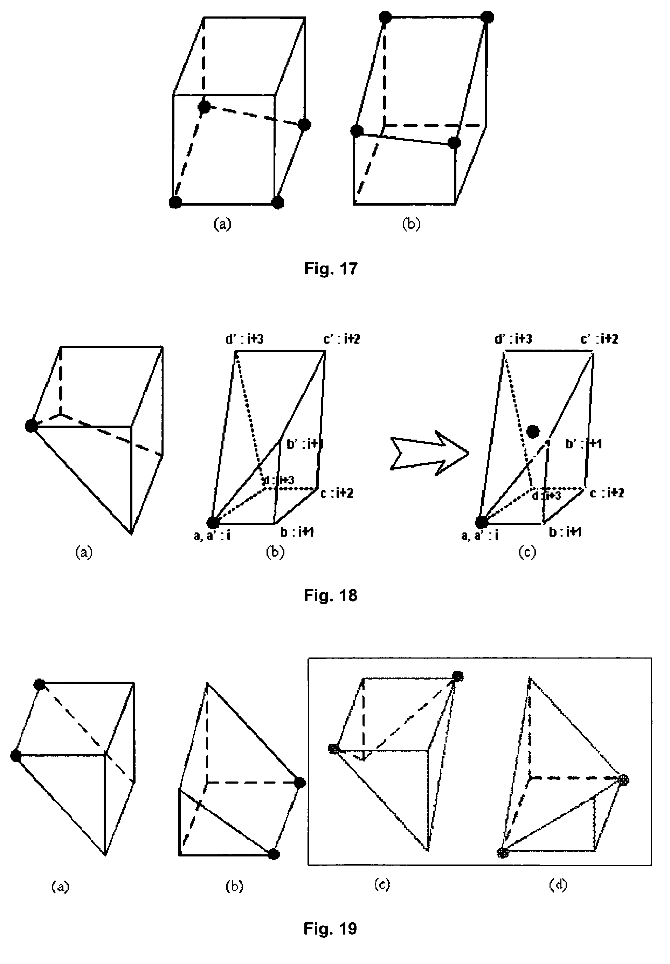

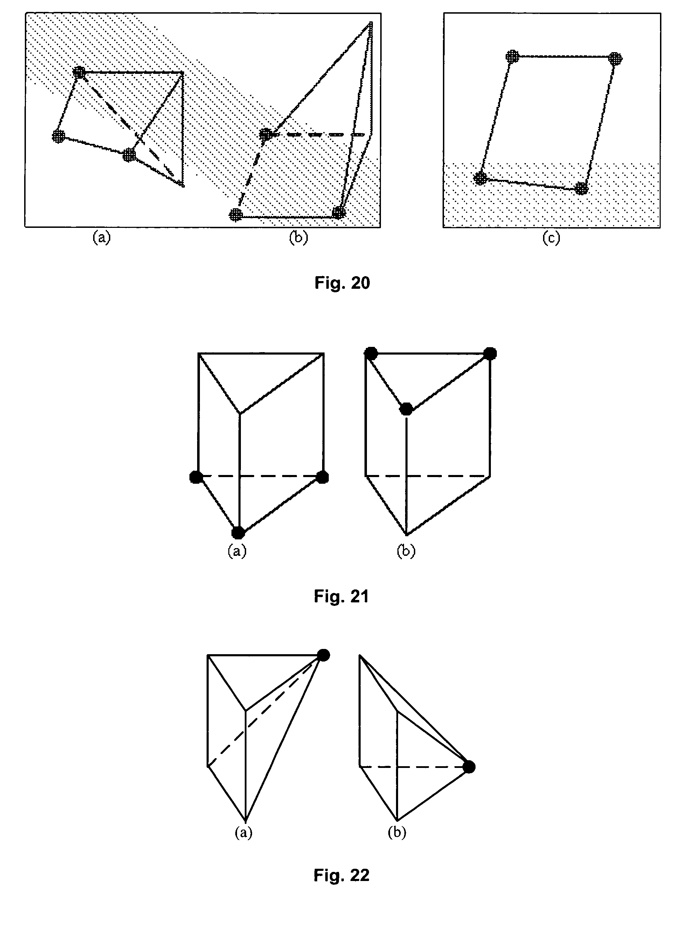

Dans le cas d'un hexaèdre créé pour connecter un quadrilatère d'un horizon avec son image sur une faille, cet hexaèdre peut avoir zéro, un, deux, trois ou quatre sommets du quadrilatère confondus avec son image sur la faille. On obtient ainsi un hexaèdre non dégénéré (figure 17), ou un hexaèdre dégénéré avec sept, six, cinq, ou quatre sommets distincts (figures 18 à 20). Les deux dernières situations ne sont néanmoins pas possibles (figures 19(c), 19(d) et 20). Ces situations ne se forment jamais car une faille ne peut jamais passer par deux sommets opposés d'un quadrilatère, ni par trois ou quatre sommets en même temps. Ainsi :

-    Pour un hexaèdre dégénéré avec sept sommets distincts montré sur les figures 18(a) et 18(b), l'élément est découpé en deux tétraèdres et quatre pyramides en connectant le centre de l'élément avec ses six faces. Cette solution est illustrée sur la figure 18(c).

-    Pour un hexaèdre dégénéré avec sept sommets distincts montré sur les figures 19(a) et 19(b), on remplace l'élément par un prisme.

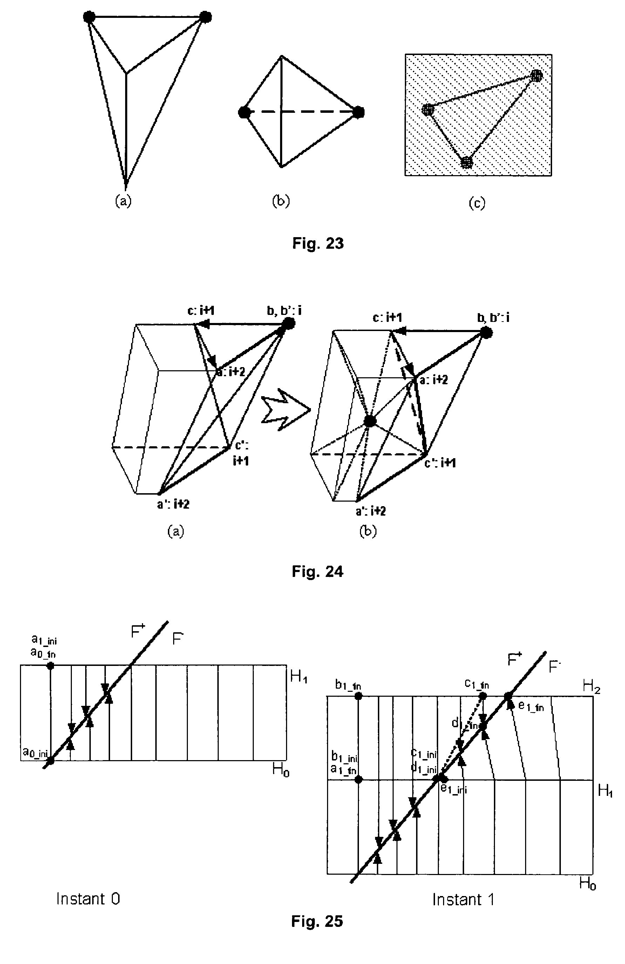

Dans le cas d'un prisme créé pour connecter un triangle d'un horizon avec son image sur une faille, ce prisme peut avoir zéro, un, deux ou trois sommets du triangle confondus avec son image sur la faille. On obtient ainsi un prisme non dégénéré (figure 21), ou un prisme dégénéré avec cinq, quatre ou trois sommets distincts (figures 22, 23). Néanmoins, un prisme dégénéré avec trois sommets distincts ne se forme jamais, car une faille ne peut jamais passer par trois sommets d'un triangle en même temps. Ainsi :

-    Pour un prisme dégénéré possédant seulement cinq sommets, la régularisation consiste à remplacer le prisme par une pyramide.

-    Pour un prisme dégénéré possédant seulement quatre sommets, la régularisation consiste à remplacer le prisme par un tétraèdre.

Dans le cas d'un prisme créé pour connecter deux triangles d'un horizon avec un quadrilatère d'un autre horizon, on remarque que ces prismes sont souvent dégénérés (voir figure 24). Cette dégénérescence est due au fait que l'on relie toujours les même noeuds (I, J). Il convient de détecter cette dégénérescence puis d'optimiser les éléments concernés. La détection est réalisée de la façon suivante : pendant la création des éléments faillés, si l'élément créé est un prisme avec un sommet confondu, et si les deux éléments formateurs surfaciques correspondants sont respectivement un quadrilatère et deux triangles, on a détecté une dégénérescence potentielle et on l'ajoute dans la liste d'éléments à optimiser. Concernant l'optimisation, deux parcours sont exécutés. Le premier travaille sur toute la liste d'éléments à optimiser, et il a pour but de remplacer le prisme par un tétraèdre, et d'enregistrer l'élément voisin qui est influencé par ce remplacement. Le deuxième parcours éclate chaque élément voisin enregistré en reliant son centre avec chacune de ses faces, dont une est divisée en deux triangles par une de ses diagonales calculée pendant le premier parcours.

Sur la figure 24(a) l'élément abc-a'b'c' est le prisme à optimiser qui a deux sommets b, b' confondus. Il est dégénéré en une pyramide ayant acc'a' en tant que base et b/b' en tant que pic. Les deux faces latérales aa'b et a'c'b se trouvent dans le même pseudo-plan formé par deux arêtes faillées ab et a'c', et la base acc'a' est torsadée, ce qui n'est pas souhaitable. Sur la figure 24(b) une solution de régularisation est proposée. Supposons que les sommets superposés b/b' aient l'indice local "i", les indices locaux pour les autres noeuds de l'élément sont ainsi déterminés, de même pour les indices locaux pour les arêtes en haut et en bas. Le tétraèdre remplaçant est abcc', formé à partir du triangle abc sur le même horizon que les sommets superposés b/b' ; le quatrième sommet est c', le noeud avec (i+1) comme indice local dans le triangle sur l'autre horizon. L'élément voisin influencé est celui ayant la face a'c'ca en commun. Pour rester conforme à l'interface de cette face commune, cette dernière est découpée en deux triangles ; par conséquent, l'élément voisin est divisé en reliant son centre avec chaque de ses faces.

Ainsi, la méthode de régularisation appliquée est la suivante :

<u>Pour des cellules créées pour connecter un triangle ou quadrilatère d'un horizon sur une faille :</u>

- Lorsque la cellule est un hexaèdre dégénéré possédant seulement sept sommets, alors la régularisation consiste à découper la cellule en deux tétraèdres et quatre pyramides en connectant le centre de la cellule avec ses six faces.

- Lorsque la cellule est un hexaèdre dégénéré possédant seulement six sommets, alors la régularisation consiste à remplacer la cellule par un prisme.

- Lorsque la cellule est un prisme dégénéré possédant seulement cinq sommets, alors la régularisation consiste à remplacer le prisme par une pyramide.

- Lorsque la cellule est un prisme dégénéré possédant seulement quatre sommets, alors la régularisation consiste à remplacer le prisme par un tétraèdre.

<u>Pour des cellules créées pour connecter deux triangles d'un horizon avec un quadrilatère d'un autre horizon :</u>

Lorsque la cellule (un prisme) dégénérée possède seulement quatre sommets, alors la régularisation consiste à remplacer le prisme par un tétraèdre, puis pour chaque élément voisin à relier son centre avec chacune de ses faces, dont une est divisée en deux triangles par une de ses diagonales.

<u>7. Étape d'itération sur des instants géologiques ultérieurs</u>

Tous les quadrillages des horizons présents à l'instant courant sont d'abord mis à jour selon les nouvelles géométries de leurs triangulations sous-jacentes. Le maillage obtenu de l'instant précédent est aussi déformé pour suivre le déplacement de ses noeuds. Une nouvelle couche sédimentaire est ajoutée au maillage avec la technique décrite précédemment.

Selon un mode de réalisation, cette étape comporte la définition d'un chemin d'évolution pour les nouveaux noeuds au sein de chaque itération sur les instants géologiques ultérieurs.

Une nouvelle couche correspond à un événement géologique de dépôt. Bien que l'événement soit représenté par un seul instant, ce dépôt ne se fait pas d'un coup ; au contraire, il se réalise d'une manière continue et prend souvent des millions d'années. Pour simuler les phénomènes physiques ou chimiques associés, le schéma numérique de modélisation de bassin définit certaines informations spécifiques à une nouvelle couche, ce qui est :

- un début de l'instant de dépôt ;

- une fin de l'instant de dépôt ;

- des états intermédiaires linéairement interpolés entre le début et la fin de l'instant de dépôt ;

Le début d'un instant correspond à la fin de l'instant précédent, et la fin d'un instant correspond au début de l'instant suivant. Pour une nouvelle couche, elle est considérée être déposée à partir de l'horizon supérieur à l'instant précédent. Par conséquent, au début de son instant de dépôt, une couche a une épaisseur nulle, et atteint sa valeur maximale à la fin de l'instant. La série de maillages volumiques générée par le processus décrit précédemment correspond à l'état terminal de chaque instant de dépôt. Il faut donc pouvoir déduire leurs états initiaux. Cette déduction se fait sur les noeuds de maillage : on définit la position initiale de chaque noeud au sommet de la nouvelle couche. C'est ce qu'on appelle "la définition de chemin d'évolution des noeuds".

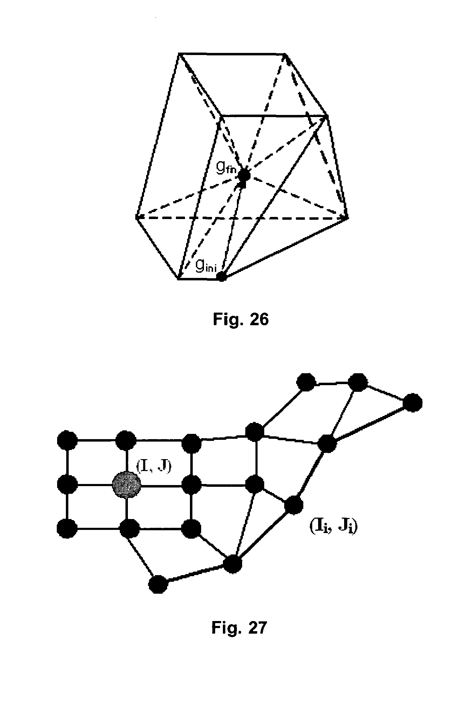

On se réfère maintenant à la figure 25. Pour un noeud au sommet de la nouvelle couche, il est soit sur l'horizon en haut (noeud a0_fin, b1_fin, c1_fin), soit sur une faille qui entre dans la couche (noeud e1_fin). Ce noeud est verticalement relié à un autre noeud, qui est soit sur l'horizon en bas (noeud a0_ini, b1_ini, e1_ini), soit sur une faille (noeud d1_fin). Il existe des noeuds qui se situent au milieu de la couche (noeud gfin sur la figure 26) et qui sont reliés aux noeuds sur l'horizon en bas.

Si un noeud au sommet de la nouvelle couche est relié à un autre noeud sur l'horizon en bas, ce dernier peut être utilisé en tant que position initiale. Quand un noeud au sommet de la nouvelle couche est relié à un autre noeud positionné sur une faille situé au milieu de la couche, ce dernier n'existe pas encore au début de l'instant de dépôt ; par conséquent, il ne peut pas être utilisé en tant que position initiale. Une solution basée sur les piliers de faille est proposée pour résoudre ce problème de définition de chemin d'évolution.

Pour éviter le problème éventuel de définition stricte des positions initiales des noeuds au sommet d'une nouvelle couche, on ne référence que les noeuds sur l'horizon en bas pour définir la position initiale d'un noeud. Cette technique est basée sur les noeuds piliers de faille, elle se déroule selon un des trois cas suivants :

- pour chaque noeud au sommet de la nouvelle couche relié à un autre noeud positionné sur une faille, on définit la position initiale de ce noeud par le noeud pilier de la faille correspondant. Ainsi, c1_ini (d1_ini) définit la position initiale de c1_fin (figure 25);

- pour chaque noeud de la nouvelle couche positionné sur une faille, on définit la position initiale de ce noeud par le noeud pilier de la faille correspondant. Le noeud connectant sur l'horizon en bas n'est pas pris, car les deux côtés de la faille ne sont pas collés dans ce cas tout au long du processus de dépôt. Ainsi, d1_ini (c1_ini) définit la position initiale de d1_fin ; de la même manière est défini le chemin d'évolution de e1_ini, le pilier de faille à l'autre côté, vers e1_fin (figure 25) ;

- pour un noeud non positionné sur une faille et situé au milieu de la nouvelle couche, on définit la position initiale de ce noeud par un des noeuds connectant sur l'horizon en bas.

Ainsi, dans figure 26, g1_ini, le pilier de faille à l'autre côté définit la position initiale de g1_fin.

Le pilier d'une faille désigne ici les deux traces de la faille sur l'horizon en bas d'une couche. Le noeud pilier qui correspond à un noeud au sommet d'une nouvelle couche est à choisir parmi les noeuds constituant la trace de faille du même côté que le noeud au sommet de la nouvelle couche. Ce choix est fait en se basant sur la stratégie du « plus court chemin » entre les noeuds piliers de la faille et le noeud au sommet de la nouvelle couche (figure 27). Un chemin entre deux noeuds (I, J) et (Ii, Ji) est défini par |I-Ii| + |J-Ji|. Pour un noeud positionné sur une faille au milieu de la couche, ses coordonnées (I, J) sont les mêmes que son noeud connectant.

La structure de données associée à la définition de chemin d'évolution est un « map » qui associe le noeud représentant la position initiale à celui représentant sa position finale. Ce « map » est mis à jour avec le couplage des noeuds en haut et en bas d'une cellule normale (non faillée) pendant sa création. Il est ensuite complété par ajout des couples (noeud au sommet de la nouvelle couche, noeud pilier de faille) pendant la construction des cellules faillées. Enfin, l'étape de régularisation d'éléments volumiques forme parfois des noeuds non positionnés sur une faille au milieu de la couche, dont le chemin d'évolution est également renseigné dans le « map ».

Un maillage construit selon l'invention est particulièrement adapté pour simuler l'histoire de la formation des systèmes pétroliers au sein d'un bassin en zone à géométrie complexe, fournissant ainsi un outil précis pour réaliser une modélisation de bassin. En particulier, le maillage généré à l'état actuel peut servir en tant que support dans la modélisation de l'histoire d'enfouissement des sédiments (la restauration des bassins sédimentaires), et pour la simulation d'écoulements dans un réservoir.

Ainsi une méthode pour simuler la formation des systèmes pétroliers au sein d'un milieu poreux souterrain en zone à géométrie complexe, comprend la génération d'un maillage hexa-dominant évolutif à partir de la méthode selon l'invention, puis la réalisation de simulations au moyen d'un logiciel adapté (simulateur de bassin ou simulateur de réservoir) s'appuyant sur le maillage ainsi généré. Ces simulations permettent aux spécialistes d'optimiser l'exploration de champ pétrolier, l'exploration ou l'exploitation de réservoir souterrain.

Une méthode d'exploitation d'un milieu souterrain, comprend alors la génération d'un maillage du milieu selon l'invention, la réalisation d'au moins une simulation d'écoulement au moyen d'un logiciel, tel qu'un simulateur de bassin, en s'appuyant sur le maillage, l'utilisation de la simulation pour définir un schéma d'exploitation du milieu, et la mise en oeuvre du schéma d'exploitation.

**Revendications**

1. Méthode pour générer un maillage d'un milieu souterrain comprenant au moins une couche sédimentaire traversée par au moins une faille, ladite couche étant délimitée verticalement par deux horizons géologiques discrétisés par deux surfaces tridimensionnelles triangulées, **caractérisée en ce que** :

   i. on transforme chaque surface tridimensionnelle en un quadrillage bidimensionnel régulier au moyen d'une technique de dépliage isométrique tenant compte de ladite faille, et en conservant un même nombre de quadrilatère dans chaque direction pour chaque quadrillage ;
   ii. on transforme chaque quadrillage régulier en une surface quadrillée tridimensionnelle, et on transforme en deux triangles chaque quadrilatère traversé par ladite faille au niveau d'une diagonale, chaque surface quadrillée comportant ainsi un ensemble d'éléments surfaciques triangulaires et quadrilatères ;

iii. on génère ledit maillage du milieu souterrain en générant des cellules par création de liaisons entre des noeuds des éléments surfaciques des deux surfaces quadrillées tridimensionnelles :

- en détectant des noeuds d'une première surface quadrillée situés d'un côté de la faille différent de celui d'un noeud d'une seconde surface quadrillée ayant des mêmes coordonnées i, j ;
- en reliant chaque noeud de la première surface quadrillée non détecté avec un noeud de la seconde surface quadrillée ayant des mêmes coordonnées i, j ;
- en reliant chaque noeud de la première surface quadrillée détecté avec ladite faille en considérant une direction d'un noeud voisin ; et
- en régularisant des cellules ayant au moins deux sommets confondus.

2. Méthode selon la revendication 1, dans laquelle on réalise l'étape de détection de noeuds en construisant une carte constituée d'une grille sur laquelle on superpose une trace fermée de ladite faille, la dite trace fermée correspondant aux traces de la faille sur chacune des dites surfaces quadrillées, et l'on détecte les noeuds à relier présents dans ladite trace fermée.

3. Méthode selon l'une des revendications précédentes, dans laquelle on régularise des cellules au moyen des étapes suivantes :

- pour des cellules créées pour connecter un élément surfacique sur une faille :

o Lorsque la cellule est un hexaèdre possédant seulement sept sommets, on découpe la cellule en deux tétraèdres et quatre pyramides en connectant le centre de la cellule avec ses six faces ;
o Lorsque la cellule est un hexaèdre possédant seulement six sommets, on remplace la cellule par un prisme ;
o Lorsque la cellule est un prisme possédant seulement cinq sommets, on remplace la cellule par une pyramide ;
o Lorsque la cellule est un prisme possédant seulement quatre sommets, on remplace la cellule par un tétraèdre.

- pour des cellules créées pour connecter deux triangles avec un quadrilatère, lorsque la cellule est un prisme possédant seulement quatre sommets, on remplace le prisme par un tétraèdre, puis pour chaque élément voisin on relie son centre avec chacune de ses faces, dont une est divisée en deux triangles par une de ses diagonales.

4. Méthode selon l'une des revendications précédentes, dans laquelle ledit maillage est évolutif, et l'on modifie ledit maillage pour prendre en compte un dépôt d'une nouvelle couche sédimentaire au cours d'un temps géologique ultérieur, en définissant un chemin d'évolution des noeuds au somment dudit milieu, et en déformant ledit maillage selon le chemin d'évolution.

5. Méthode selon l'une des revendications précédentes, dans laquelle on prend en compte la faille au sein dudit quadrillage régulier, en réalisant les étapes suivantes :

- on transforme chaque surface tridimensionnelle triangulée en une surface bidimensionnelle triangulée sur laquelle on projette ladite faille, au moyen de ladite technique de dépliage isométrique, la faille ainsi projetée formant des segments décrivant une ligne ouverte ;
- on détermine une première arrête dudit quadrillage intersectée par ladite ligne ouverte, en parcourant ladite ligne segment par segment et en partant d'une extrémité de ladite ligne ouverte ;
- on déplace l'extrémité de l'arête intersectée la plus proche du point d'intersection vers ledit point d'intersection ;

6. Méthode selon l'une des revendications précédentes, dans laquelle ledit milieu comporte plusieurs failles, on prend en compte les failles au sein dudit quadrillage régulier, en réalisant les étapes suivantes :

- on détermine une première arête dudit quadrillage intersectée par ladite ligne ouverte, en parcourant ladite ligne segment par segment et en partant d'une extrémité de ladite ligne ouverte ;
- on déplace l'extrémité de l'arête la plus proche du point d'intersection vers ledit point d'intersection si ce déplacement n'engendre pas un quadrilatère dont au moins un angle est supérieur à un seuil d'angle fixé, et si cette extrémité n'a pas déjà été déplacée ; sinon
- on déplace l'autre extrémité vers ledit point d'intersection si cette extrémité n'a pas déjà été déplacée ; sinon

- on raffine le maillage, jusqu'à ce qu'une extrémité puisse être déplacée, et on déplace cette extrémité.

7. Méthode selon la revendication 6, dans laquelle on raffine le maillage au moyen des étapes suivantes :

- on ajoute un nouveau noeud au maillage, correspondant à un point d'intersection entre une faille et l'arête pour laquelle aucune extrémité ne peut être déplacée ;
- si l'arête est verticale, on dédouble la ligne complète du quadrillage contenant le point d'intersection, en ajoutant une succession d'arêtes horizontales, dans tous les quadrilatères de la ligne, la succession d'arêtes passant par le point d'intersection ;
- si l'arête est horizontale, on dédouble la colonne complète du quadrillage contenant le point d'intersection, en ajoutant une succession d'arêtes verticales, dans tous les quadrilatères de la colonne, la succession d'arêtes passant par le point d'intersection.

8. Méthode selon l'une des revendications précédentes, dans laquelle on transforme ledit quadrillage régulier en une surface quadrillée à trois dimensions en réalisant les étapes suivantes :

- pour chaque noeud non situé sur une faille, on détermine ses coordonnées à partir de coordonnées barycentriques du noeud dans un repère défini par un triangle de la surface triangulée 2D auquel il appartient ;
- pour chaque noeud situé sur une faille, on détermine ses coordonnées à partir d'abscisses curvilignes mesurées sur ladite faille ;
- on établit des connectivités entre les noeuds de façon à maximiser un nombre de quadrilatère, seuls des quadrilatères pour lesquels une faille passe par l'une de ses diagonales, sont divisés en deux triangles.

9. Méthode d'exploitation d'un milieu souterrain, **caractérisée en ce que** l'on génère un maillage dudit milieu selon l'une des revendications précédentes, on réalise au moins une simulation d'écoulement au moyen d'un logiciel, tel qu'un simulateur de bassin, en s'appuyant sur ledit maillage, et on utilise ladite simulation pour définir un schéma d'exploitation dudit milieu, et on met en oeuvre le dit schéma d'exploitation.

Fig. 1

Fig. 4

Fig. 2

Fig. 3

Fig. 5

Fig. 6

Fig. 7

Fig. 8

**Fig. 9**

**Fig. 10**

26

EP 2 407 934 A2

Fig. 11

Fig. 12

Fig. 13

27

Fig. 14

Fig. 15

Fig. 16

Fig. 17

Fig. 18

Fig. 19

**Fig. 20**

**Fig. 21**

**Fig. 22**

**Fig. 23**

**Fig. 24**

Instant 0

Instant 1

**Fig. 25**

**Fig. 26**

**Fig. 27**

**EP 2 407 934 A2**

# RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2747490

**Littérature non-brevet citée dans la description**

- **Z.E. HEINEMANN ; G.F. HEINEMANN ; B.M. TRANTA.** Modelling heavily faulted reservoirs. *Proceedings of SPE Annual Technical Conferences,* Septembre 1998, 9-19